# EUROPÄISCHE PATENTSCHRIFT

(11) **EP 1 632 696 B1**
(45) Veröffentlichungstag und Bekanntmachung des Hinweises auf die Patenterteilung: **07.12.2011**
(21) Anmeldenummer: 05017262.6
(22) Anmeldetag: 09.08.2005
(51) Int. Cl.: F16H 61/16, F16H 61/18

(54) **Verfahren und Vorrichtung zum Verhindern des Einlegens eines unzulässigen Gangs bei einem automatisierten Schaltgetriebe**
Method and device to prevent erroneous shift for an automated transmission
Procédé et dispositif pour interdire le passage d'une vitesse erronée sur une boîte de vitesses automatisée

(30) Priorität: 03.09.2004 DE 102004042642
(43) Veröffentlichungstag der Anmeldung: 08.03.2006
(73) Patentinhaber: Schaeffler Technologies GmbH & Co. KG, 91074 Herzogenaurach (DE)
(72) Erfinder: Maxon, Andreas, 76137 Karlsruhe (DE)

(56) Entgegenhaltungen:
- EP-A1- 0 373 273
- DE-A1- 10 312 401
- DE-A1- 10 316 442
- DE-A1- 19 707 141

## Beschreibung

Die Erfindung betrifft ein Verfahren und eine Vorrichtung zum Verhindern des Einlegens eines unzulässigen Gangs bei einem automatisierten Schaltgetriebe mit einem Schaltglied, welches längs einer Wählgasse und aus dieser heraus in Ganggassen bewegbar ist.

Moderne Kraftfahrzeuge werden zunehmend mit automatisierten Schaltgetrieben ausgerüstet, da mit diesen nicht nur der Fahrkomfort verbessert, sondern auch der Verbrauch abgesenkt werden kann.

Aus der DE 103 16 442 A1 ist ein Verfahren zum Erkennen eines Fehlers während des Wählens und/oder des Schaltens der Getriebeaktorik der Getriebesteuerung eines automatisierten Schaltgetriebes bekannt, bei dem eine Plausibilisierung von gemessenen und hinterlegten Signalen durchgeführt wird. Bei fehlender Plausibilisierung von gemessenen und hinterlegten Signalen erfolgt eine Fehlermeldung. Die genannte Druckschrift beschäftigt sich weiter mit der zweckmäßigen Ansteuerung eines Schaltaktors während der unterschiedlichen Phasen des Einlegens eines Gangs, insbesondere während der Synchronisierung.

Die gattungsbildende DE 103 12 401 A1 beschreibt einen Getriebeaktor und ein Verfahren zum Durchführen einer Referenzierung der Getriebegeometrie bei einem automatisierten Getriebe. Dabei wird zumindest ein eingelernter Wert der Getriebegeometrie mit zumindest einem tatsächlichen Wert der Getriebegeometrie verglichen, wobei ein unplausibler Wert durch einen vorbestimmten Wert ersetzt wird.

Aus der DE 197 07 141 A1 ist eine Anordnung zum Erfassen von Betätigungs- oder Schaltzuständen einer Getriebebetätigungsvorrichtung bekannt, wobei ein Schaltglied in einer Wählgasse und in drei Schaltgassen bewegt werden kann, die senkrecht von der Wählgasse abgehen. Ein Stellweg eines die Bewegung eines Schaltgliedes in einer Schaltgasse erfassenden Sensors ist in mehrere Bereiche unterteilt, die den Phasen bzw. Funktionen des Einlegens eines Ganges aus der Wählgasse bzw. der Neutralstellung heraus entsprechen.

Der Erfindung liegt die Aufgabe zugrunde, eine Möglichkeit zu schaffen, mit der auf einfache Weise schon das Einlegen eines fehlerhaften Ganges erkannt und verhindert wird, insbesondere wenn das potentielle Einlegen eines unzulässigen Ganges durch einen Fehler in der Systemsteuerung des automatisierten Schaltgetriebes verursacht wird.

Diese Aufgabe wird gelöst mit einem Verfahren zum Verhindern des Einlegens eines unzulässigen Gangs bei einem automatisierten Schaltgetriebe mit einem Schaltglied, welches längs einer Wählgasse und aus dieser heraus in Ganggassen bewegbar ist, enthaltend folgende Schritte:
- Erfassen der Ganggasse, in die das Schaltglied bewegt wird,
- Erfassen der augenblicklichen Fahrzeuggeschwindigkeit,
- Überprüfen, ob der zu der Ganggasse gehörende Gang bezogen auf die augenblickliche Fahrzeuggeschwindigkeit zulässig ist,
- Erfassen der Ansteuerung eines Schaltaktors bei unzulässigem Gang und
- Auslösen einer Fehlerreaktion bei Tätigkeit des Schaltaktors in Richtung des Einlegens des als unzulässig erkannten Gangs.

Bei einer bevorzugten Durchführungsform des Verfahrens wird ein Gang als unzulässig bewertet, wenn er bezogen auf die augenblickliche Fahrzeuggeschwindigkeit zu klein ist.

Vorteilhafterweise wird der Schaltaktor bei einer Fehlerreaktion deaktiviert.

Alternativ und/oder zusätzlich kann eine Steuereinrichtung des Schaltaktors bei einer Fehlerreaktion rückgesetzt werden.

In einer bevorzugten Durchführungsform des erfindungsgemäßen Verfahrens dauert die Erfassung der Ansteuerung eines Schaltaktors an, solange sich das Schaltglied in der Ganggasse eines unzulässigen Gangs befindet.

Eine weitere Lösung der Erfindungsaufgabe wird erreicht mit einer Vorrichtung zur Durchführung des Verfahrens nach Ansprüche 1 und 5 enthaltend einen Wählaktor zum Bewegen eines Schaltgliedes längs einer Wählgasse, einen Schaltaktor zum Bewegen des Schaltgliedes längs Schaltgassen, eine Sensoreinrichtung zur Erfassung einer Fahrzeuggeschwindigkeit und eine Steuereinrichtung zum Steuern des Wählaktors und des Schaltaktors.

Mit der Erfindung ist es möglich, sicherheitskritische Situationen für Insassen und Umwelt, die durch Fehlfunktionen eines in einem Getriebesteuergerät enthaltenen Prozessors verursacht werden können, abzufangen. Solche sicherheitskritischen Situationen können sich in vielfältiger Weise ergeben.

Die Erfindung wird im Folgenden anhand schematischer Zeichnungen beispielsweise und mit weiteren Einzelheiten erläutert.

In den Figuren stellen dar:
Fig. 1 Teile einer an sich bekannten Betätigungsseinrichtung für ein automatisiertes Schaltgetriebe,
Fig. 2 ein Schaltschema eines automatisierten Schaltgetriebes, und
Fig. 3 ein Flussdiagramm zur Erläuterung des erfindungsgemäßen Verfahrens.

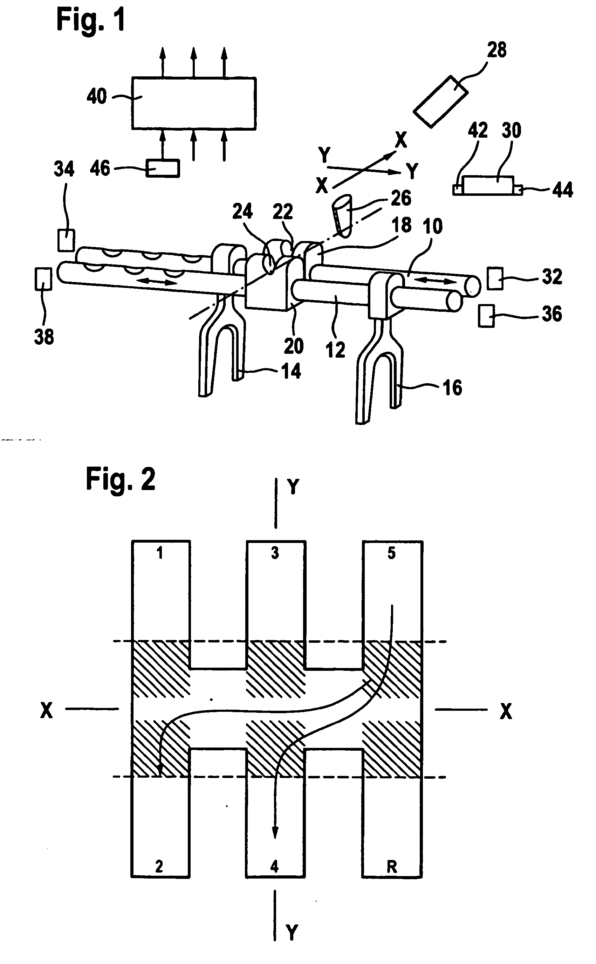

Gemäß Fig. 1 gehört zu einem an sich bekannten, nicht dargestellten, automatisierten Schaltgetriebe eine Einrichtung mit getriebeinternen Bauteilen und eine getriebeexterne Betätigungseinrichtung. Die getriebeinternen Bauteilen enthalten im dargestellten Beispiel zwei parallel zueinander beweglich angeordnete Schaltstangen 10, 12, mit je einer Schaltgabel 14, 16 und einem Schaltblock 18, 20 mit einer Aussparung 22, 24 an der Oberseite.

Für einen Eingriff in jeweils eine der Aussparungen 22, 24 ist ein Schaltfinger 26 vorgesehen, der mittels eines Wählaktors 28 in eine X-Richtung quer zur Bewegbarkeitsrichtung der Schaltstangen 10, 12 bewegbar ist und mit einem Schaltaktor 30 parallel zur Bewegbarkeitsrichtung der Schaltstangen 10, 12 in eine Y-Richtung bewegbar ist. Der Schaltfinger 26 ist in an sich bekannter Weise beispielsweise an einer an einem Gehäuse des Getriebes verschieb- und schwenkbar angebrachten Stange befestigt, die mit Hilfe des Wählaktors 28 verschiebbar ist und mit Hilfe des Schaltaktors 30 um ihre Längsachse drehbar ist.

Das Schalten geschieht derart, dass der nach Betätigen des Wählaktors 28 in einer der Aussparungen 22, 24 befindliche Schaltfinger 26 gemäß der Figur beispielsweise nach links verschoben bzw. verschwenkt wird, wobei die zugehörige Schaltgabel eine an einer Getriebewelle befestigte Kupplungsmuffe verschiebt, so dass eine Synchronisierung herbeigeführt wird, im Anschluss an die ein neuer Gang eingelegt werden kann. Zur Funktionsüberwachung der Betätigungseinrichtung und insbesondere für eine Referenzierung sind für die getriebeinterne Schalteinrichtung Anschläge 32, 34, 36 und 38 vorgesehen, die die Bewegbarkeit der Schaltgabeln 14, 16 in die eine oder andere Y-Richtung begrenzen. Das Erreichen eines Anschlages wird beispielsweise durch plötzlichen Anstieg der Stromaufnahme des Schaltaktors oder durch dessen Stillstand detektiert. Das Detektieren eines Anschlags kann jeweils zum Referenzieren eines Inkrementzählers verwendet werden, der mit dem Schaltaktor gekuppelt ist. Alternativ und/oder zusätzlich können unmittelbar am Schaltaktor 30 Anschläge 42, 44 vorgesehen sein, die dessen Bewegbarkeit begrenzen und zur Referenzierung dienen. Ähnlich können getriebeintern oder getriebeextern Anschläge für die Bewegung des Schaltfingers 26 in X-Richtung (Wählgasse) mittels des Wählaktors 28 vorgesehen sein.

Zur Steuerung der Aktoren 28 und 30 dient eine Steuereinrichtung 40, die einen Mikroprozessor mit zugehörigen Speichern enthält, in denen Fahrprogramme gespeichert sind, entsprechend denen, abhängig von Betriebszuständen des Fahrzeuges, der Betrieb der Aktoren 28 und 30 gesteuert wird. Im Steuergerät 40 sind vorteilhafterweise die augenblickliche Geschwindigkeit des Fahrzeuges, beispielsweise von einem Randdrehzahlsensor 46 erfasst, die Motordrehzahl, die Stellung eines nicht dargestellten Fahrpedals, eines nicht dargestellten Wählhebels zur Aktivierung verschiedener Steuerprogramme sowie normalerweise die Stellung des Schaltgliedes 26 in X- und Y-Richtung bekannt, aus denen auf den jeweils eingelegten Gang bzw. die Stellung der Getriebeaktorik insgesamt geschlossen werden kann.

Für die Verkehrssicherheit eines mit einem automatisierten Schaltgetriebe ausgerüsteten Fahrzeugs ist ein Höchstmaß an Betriebssicherheit der Steuereinrichtung 40 bzw. der Steuerung der Aktoren und des Schaltfingers von grundlegender Bedeutung. Sicherheitskritische Situationen für Insassen und Umwelt, die durch Fehlfunktionen des in der Steuereinrichtung 40 enthaltenen Prozessors verursacht werden können, sollten schon im Vorfeld abgefangen werden können. Eine sicherheitskritische Situation kann sich beispielsweise ergeben, wenn aufgrund eines Fehlers in der Systemsteuerung, beispielsweise eines Prozessorfehlers, aber auch eines Fehlers in der Software, versucht wird, einen für die Geschwindigkeit des Fahrzeuges zu kleinen Gang einzulegen. Geschieht dies, besteht die Gefahr, dass
- durch die wirkenden Kräfte eine nicht dargestellte Kupplung zerstört wird,
- bei einem nach dem Einlegen eines zu kleinen Gangs erfolgenden Schließen der Kupplung der Antriebsmotor des Fahrzeuges durch eine Überdrehzahl geschädigt wird, oder beispielsweise die angetriebenen Räder blockieren und das Fahrzeug von der Straße abkommt.

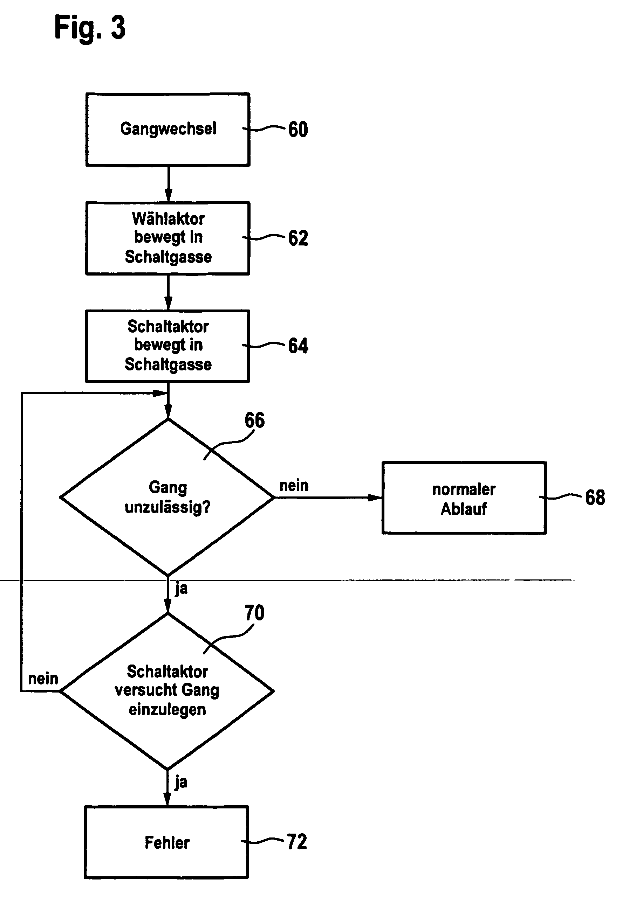

Das erfindungsgemäße Verfahren, mit dem solche sicherheitskritischen Situationen bereits im Entstehen erkannt werden, wird im Folgenden anhand der Figuren 2 und 3 erläutert:

Fig. 2 zeigt ein Getriebeschaltbild, wobei eine Neutral- oder Wählgasse in der X-X-Richtung verläuft. Von der Wählgasse gehen drei Schaltgassen ab, wobei in einer jeweils oberen Ganggasse die Gänge 1, 3 und 5 eingelegt werden können, und in der unteren Ganggasse die Gänge 2, 4 und R eingelegt werden können. Jeweils zwei sich gegenüberliegende Ganggassen bilden eine Schaltgasse. Es sei beispielhaft angenommen, der fünfte Gang sei eingelegt und das Fahrzeugfähre mit 120 km/h bei einer Motordrehzahl von 3500 min⁻¹. Im vierten Gang betrage die Drehzahl bei 120 km/h 4000 min⁻¹ und im zweiten Gang betrage sie 7000 min⁻¹. Die Höchstdrehzahl des Motors liege bei 6000 min⁻¹. Bei einer Fahrzeuggeschwindigkeit von 120 km/h ist der zweite Gang dann ein unzulässiger Gang.

Es sei nun angenommen, in Folge eines Prozessorfehlers werde der Schaltfinger 26 in den schraffierten Bereich der Schaltgasse des zweiten Gangs bewegt. Die schraffierten Bereiche markieren für jeden Gang einen Bereich, in dem die Synchronisierung erfolgt, d.h. die zugehörige Getriebewelle auf die Drehzahl des Gangrandes gebracht wird. Wenn der Schaltfinger aus der Wählgasse in den Anfangsbereich der Ganggasse 2, d.h. den Synchronisierbereich gebracht wird, wird in der Steuereinrichtung 40 überprüft, ob der zweite Gang bei der augenblicklichen Fahrzeuggeschwindigkeit ein zulässiger Gang ist. Ist dies nicht der Fall, d.h. wird Gang 2 als zu klein eingestuft, wird von der Steuereinrichtung die Ansteuerung des Schaltaktors 30, beispielsweise durch Integration der anliegenden Spannung, erfasst, so dass festgestellt werden kann, ob der Schaltaktor trotz des als unzulässig erkannten Ganges weiterhin versucht, den zweiten Gang einzulegen. Ist dies der Fall, so wird nach kurzer Zeit, zum Beispiel, wenn das Spannungsintegral einen Grenzwert überschreitet, eine Fehlerreaktion ausgelöst, die dazu führt, dass der Schaltaktor 30 deaktiviert wird und/oder beispielsweise ein Reset der Steuereinrichtung 40 auslöst.

Im dargestellten Beispiel muss mit der Erkennung eines Gangs als unzulässig nicht gewartet werden, bis der Schaltfinger vom Schaltaktor in Richtung des Einlegens eines Ganges, d.h. in den Synchronisierbereich des zweiten Ganges bewegt wird, da beide Gänge der betreffenden Schaltgasse, d.h. die Gänge 1 und 2 bei 120 km/h unzulässig sind. Somit kann bereits allein aus der Bewegung des Schaltfingers längs der Wählgasse in die der Schaltgasse 1/2 entsprechenden Stellung auf die Unzulässigkeit eines nachfolgend zu schaltenden Gangs geschlossen werden und die Überwachung der Ansteuerung des Schaltaktors beginnen.

Anhand des Flussdiagramms der Fig. 3 wird das vorstehende Verfahren genauer erläutert:

In Stufe 1 entscheidet die Steuereinrichtung aufgrund der vorhandenen Betriebsparameter eine Rückschaltung, beispielsweise vom Gang 5 in den Gang 4. Die ablaufenden Betätigungen einer nicht dargestellten Kupplung werden nachfolgend nicht erläutert, da an sich bekannt. Nach der Entscheidung Gangwechsel im Schritt 60 bewegt der Schaltaktor 30 den Schaltfinger 26 in die Wählgasse und anschließend bewegt im Schritt 62 der Wählaktor 28 den Schaltfinger 26 in die Zielschaltgasse, die im vorliegenden Beispiel die Schaltgasse 3/4 sein soll. Aufgrund eines Fehlers in der Steuereinrichtung wird jedoch die Schaltgasse 1/2 angefahren. Anschließend wird der Schaltaktor 30 aktiviert, der den Schaltfinger 26 aus der Wählgasse in einen Synchronisierbereich der Zielganggasse (im vorliegenden Fall an sich 4; tatsächlich jedoch 2) bewegt (Schritt 64). Sobald der Schaltaktor den Schaltfinger in die Ganggasse hinein bewegt, kann im Schritt 66 durch Vergleich der angefahrenen Ganggasse (Stellung des Schaltfingers 26) mit der Fahrzeuggeschwindigkeit festgestellt werden, ob es sich bei der angefahrenen Ganggasse um einen unzulässigen oder einen zulässigen Gang handelt. Ist der Gang nicht unzulässig, so erfolgt im Schritt 68 ein normaler Ablauf der weiteren Schaltung, der Gang wird eingelegt.

Wird im Schritt 66 festgestellt, dass der Gang unzulässig ist (im dargestellten Beispiel bei 120 km/h der zweite Gang) so wird im Schritt 70 überprüft, ob der Schaltaktor 30 weiterhin versucht, den als unzulässig erkannten Gang einzulegen. Dies ist wegen der durch den Synchronisiervorgang verzögerten Bewegbarkeit des Schaltfingers 26 möglich, wobei die Bewegung des Schaltaktors 30 unmittelbar erfasst werden kann oder mittelbar, beispielsweise durch zeitliche Integration der anliegenden Spannung. Wird im Schritt 70 festgestellt, dass der Schaltaktor 30 weiterhin versucht, den unzulässigen Gang einzulegen, wird im Schritt 72 eine Fehlermeldung ausgelöst, die dazu führt, dass beispielsweise der Schaltaktor 30 deaktiviert wird oder aber ein Reset der elektronischen Steuereinrichtung erfolgt, in dem diese eine sichere Ausgangsstellung anfährt oder neu referenziert.

Wenn im Schritt 70 festgestellt wird, dass der Schaltaktor nicht mehr versucht, den unzulässigen Gang einzulegen, kehrt das System weiter zum Schritt 66 zurück, so dass die Überwachung des Schaltaktors auf dessen Versuch, den fehlerhaften Gang einzulegen, andauert, bis erkannt wird, dass der Wählaktor 28 den Schaltfinger aus der fehlerhaften Schalt- bzw. Ganggasse herausbewegt oder aber in einer Vorstufe (nicht dargestellt) der Schaltaktor 30 den Schaltfinger aus dem Synchronisierbereich zurück heraus in die Wählgasse (Neutralstellung) bewegt, so dass, kein unzulässiger einzulegender Gang mehr erkannt wird, oder aber die Geschwindigkeit des Fahrzeugs so weit abgenommen hat, dass der bisher unzulässige Gang zulässig wird.

Das beschriebene Verfahren bzw. die geschilderte Strategie der Prozessorüberwachung hat den Vorteil, dass keine Sollposition des Schaltfingers innerhalb der Ganggasse nach dem Beginn des Synchronisierens erfasst werden muss und somit unabhängig vom Mode des Lagereglers (Positionsregelung, Kraftregelung, Geschwindigkeitsregelung, ...) arbeitet.

Ein unzulässiges Einlegen des Rückwärtsganges bei vorwärts fahrendem Fahrzeug kann ebenfalls abgefangen bzw. verhindert werden, falls der Rückwärtsgang voll synchronisiert ist.

Das geschilderte Verfahren ist nicht nur zur Vermeidung des Einlegens eines zu kleinen Ganges oder des fälschlicherweise Einlegens des Rückwärtsgangs geeignet, sondern kann auch zur Verhinderung des Einlegens eines zu großen Gangs verwendet werden, wenn dies zu einem stark untertourigen, den Antriebsstrang überfordernden Drehen des Motors und/oder zu einer zu kleinen verfügbarer Leistung führt. Das Verfahren ist für alle Arten von automatisierten Schaltgetrieben, auch Doppelkupplungs- bzw. Parallelschaltgetrieben einsetzbar.

### Bezugszeichenliste

- 10: Schaltstange
- 12: Schaltstange
- 14: Schaltgabel
- 16: Schaltgabel
- 18: Schaltblock
- 20: Schaltblock
- 22: Aussparung
- 24: Aussparung
- 26: Schaltfinger
- 28: Wählaktor
- 30: Schaltaktor
- 32: Anschlag
- 34: Anschlag
- 36: Anschlag
- 38: Anschlag
- 40: Steuereinrichtung
- 42: Anschlag
- 44: Anschlag
- 46: Drehzahlsensor

## Patentansprüche

1. Verfahren zum Verhindern des Einlegens eines unzulässigen Gangs bei einem automatisierten Schaltgetriebe mit einem Schaltglied (26), welches längs einer Wählgasse und aus dieser heraus in Ganggassen bewegbar ist, **dadurch gekennzeichnet, daß** das Verfahren folgende Schritte enthaltet :
- Erfassen der Ganggasse, in die das Schaltglied (26) bewegt wird,
- Erfassen der augenblicklichen Fahrzeuggeschwindigkeit,
- Überprüfen, ob der zu der Ganggasse gehörende Gang bezogen auf die augenblickliche Fahrzeuggeschwindigkeit zulässig ist,
- Erfassen der Ansteuerung eines Schaltaktors (30) bei unzulässigem Gang und
- Auslösen einer Fehlerreaktion bei Tätigkeit des Schaltaktors (30) in Richtung des Einlegens des als unzulässig erkannten Gangs.

2. Verfahren nach Anspruch 1, wobei ein Gang als unzulässig bewertet wird, wenn er bezogen auf die augenblickliche Fahrzeuggeschwindigkeit zu klein ist.

3. Verfahren nach Anspruch 1 oder 2, wobei der Schaltaktor (30) bei einer Fehlerreaktion deaktiviert wird.

4. Verfahren nach Anspruch 1 oder 2, wobei eine Steuereinrichtung (40) des Schaltaktors (30) bei einer Fehlerreaktion rückgesetzt wird.

5. Verfahren nach einem der Ansprüche 1 bis 4, wobei die Erfassung der Ansteuerung des Schaltaktors (30) andauert, solange sich das Schaltglied (26) in der Ganggasse eines unzulässigen Gangs befindet.

6. Vorrichtung zum Verhindern des Einlegens eines unzulässigen Gangs bei einem automatisierten Schaltgetriebe, nach einem der Verfahrensansprüche 1 und 5, enthaltend einen Wählaktor (28) zum Bewegen eines Schaltgliedes (26) längs einer Wählgasse, einen Schaltaktor (30) zum Bewegen des Schaltgliedes längs Schaltgassen, eine Sensoreinrichtung (46) zur Erfassung einer Fahrzeuggeschwindigkeit und eine Steuereinrichtung (40) zum Steuern des Wählaktors und des Schaltaktors.

## Claims

1. Method for preventing the engagement of an inadmissible gear in an automatic shift gearbox having a shift member (26) which can be moved along a selector slot and out of the latter into gear slots, **characterized in that** the method comprises the following steps:
- detecting the gear slot into which the shift member (26) is moved,
- detecting the present vehicle speed,
- checking whether the gear belonging to the gear slot is admissible in relation to the present vehicle speed,
- detecting the actuation of a shift actuator (30) in the case of an inadmissible gear, and
- triggering a fault reaction if the shift actuator (30) acts in a direction for the engagement of the gear identified as inadmissible.

2. Method according to Claim 1, wherein a gear is evaluated as inadmissible if it is too low in relation to the present vehicle speed.

3. Method according to Claim 1 or 2, wherein the shift actuator (30) is deactivated in the event of a fault reaction.

4. Method according to Claim 1 or 2, wherein a control device (40) of the shift actuator (30) is reset in the event of a fault reaction.

5. Method according to one of Claims 1 to 4, wherein the detection of the actuation of the shift actuator (30) continues until the shift member (26) is situated in the gear slot of an inadmissible gear.

6. Device for preventing the engagement of an inadmissible gear in an automatic shift transmission according to one of the method Claims 1 and 5, comprising a selector actuator (28) for moving a shift member (26) along a selector slot, a shift actuator (30) for moving the shift member along shift slots, a sensor device (46) for detecting a vehicle speed, and a control device (40) for controlling the selector actuator and the shift actuator.

## Revendications

1. Procédé pour interdire le passage d'un rapport de vitesse erroné sur une boîte de vitesses automatisée avec un élément de changement de rapport de vitesse (26) mobile le long d'un couloir de sélection et de là dans des couloirs de rapport de vitesse, **caractérisé en ce que** le procédé comprend les étapes suivantes :
- détection du couloir de rapport de vitesse dans lequel l'élément de changement de rapport de vitesse (26) est déplacé ;
- détection de la vitesse instantanée du véhicule ;
- contrôle de si le rapport de vitesse appartenant au couloir de rapport de vitesse est autorisé en relation avec la vitesse instantanée du véhicule ;
- détection de l'excitation d'un actionneur de changement de rapport de vitesse (30) en cas de rapport de vitesse erroné ;
- déclenchement d'une réaction d'erreur en cas d'activation de l'actionneur de changement de rapport de vitesse (30) en direction du passage d'un rapport de vitesse reconnu comme erroné.

2. Procédé selon la revendication 1, dans lequel un rapport de vitesse est jugé erroné lorsqu'il est considéré comme étant trop petit par rapport à la vitesse instantanée du véhicule.

3. Procédé selon la revendication 1 ou 2, dans lequel l'actionneur de changement de rapport de vitesse (30) est désactivé en présence d'une réaction d'erreur.

4. Procédé selon la revendication 1 ou 2, dans lequel un dispositif de commande (40) de l'actionneur de changement de rapport de vitesse (30) est rétrogradé en présence d'une réaction d'erreur.

5. Procédé selon l'une quelconque des revendications 1 à 4, dans lequel la détection de l'excitation de l'actionneur de changement de rapport de vitesse (30) dure tant que l'élément de changement de rapport vitesse (26) se trouve dans le couloir de rapport de vitesse d'un rapport de vitesse erroné.

6. Dispositif pour interdire le passage d'un rapport de vitesse erroné sur une boîte de vitesses automatisée selon l'une quelconque des revendications 1 à 5, contenant un actionneur de sélection (28) permettant de déplacer un élément de changement de rapport de vitesse (26) le long d'un couloir de sélection, un actionneur de changement de rapport de vitesse (30) permettant de déplacer l'élément de changement de vitesse le long de couloirs de changement de rapport de vitesse, un dispositif de détection (46) permettant de détecter une vitesse du véhicule et un dispositif de commande (40) permettant de commander l'actionneur de sélection et l'actionneur de changement de rapport de vitesse.
